(19) **Europäisches Patentamt**

**European Patent Office**

**Office européen des brevets**

(11) **EP 1 150 221 A2**

(12) **EUROPEAN PATENT APPLICATION**

(43) Date of publication:
**31.10.2001 Bulletin 2001/44**

(51) Int Cl.$^7$: **G06F 17/50**

(21) Application number: **01109783.9**

(22) Date of filing: **20.04.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **24.04.2000 JP 2000122013**<br><br>(71) Applicant: **NEC CORPORATION**<br>**Tokyo (JP)** | (72) Inventor: **Yokota, Ikuhiro, c/o NEC Corporation**<br>**Tokyo (JP)**<br><br>(74) Representative: **Betten & Resch**<br>**Patentanwälte**<br>**Postfach 10 02 51**<br>**80076 München (DE)** |

(54) **Semiconductor device simulation apparatus as well as method and storage medium storing simulation program thereof**

(57) In device numerical analysis by a computer, in the case of analysis involving an external circuit, much better initial values are given so that calculation time is shortened. A device simulation apparatus 10 includes: a presumed potential designation unit 12 for a user to designate presumed potentials in device electrode nodes; a physical quantity initial value setting unit 14 to acquire a physical quantity by analyzing the above described presumed potentials to set the above described physical quantity as an initial value of a physical quantity at internal nodes in the device; a potential initial value setting unit 16 to set an initial value of potential at nodes of the external circuit based on the above described presumed potential; and a device analyzing unit 18 to analyze a device involving an external circuit with the above described set initial values. Usage of device electrode node potentials presumed by the user makes better initial values available.

*FIG.1*

(Device simulation apparatus)
10

Presumed potential

Presumed potential designating means — 12

Physical quantity initial value setting means — 14

Potential initial value setting means — 16

Device analyzing means — 18

Simulation result

EP 1 150 221 A2

**Description**

BACKGROUND OF THE INVENTION

Field of the Invention

The present invention relates to a semiconductor device simulation technology to experimentally create operation of a semiconductor device by numerical analysis. A semiconductor device will be referred to simply as "device" as follows.

Description of the Prior Art

[Outline on general device simulation]

Device numerical analysis uses "drift-diffusion model" approximating carriers (electrons and holes) as a fluid and "energy-transportation model" approximating them at a higher level widely

For device simulation of a drift-proliferation model under a steady state, electric charge conservation equation, electron current continuity equation and hole current continuity equation as expressed below are set as basic equations ["Process Device Simulation Technology", 100 page, compiled by Ryo Dan, Sangyo Tosho, 1990].

$$\mathrm{div}D = \rho \text{ (electric charge conservation equation)} \tag{1}$$

$$D = \varepsilon\, E \tag{2}$$

$$E = -\mathrm{grad}\psi \tag{3}$$

$$\rho = q\,(p - n + N_D - N_A) \tag{4}$$

D: electric flux density (vector quantity)
$\rho$: charge density
E: electric field (vector quantity)
$\varepsilon$ : dielectric constant
q: unit charge
p: hole density
n: density of electrons
$N_D$ : donor density
$N_A$: acceptor density

$$\mathrm{div}\ Jn = q \cdot (R-G) \text{ (electron current continuity equation)} \tag{5}$$

$$\mathrm{div}\ Jp = -q \cdot (R-G) \text{ (hole current continuity equation)} \tag{6}$$

Jn: electron current (vector quantity)
Jp: hole current (vector quantity)
R: carrier re-coupling component
G: carrier creating component

$$Jn = q \cdot n \cdot \mu n \cdot E + q \cdot Dn \cdot \mathrm{grad}n \tag{7}$$

$$Jp = q \cdot p \cdot \mu p \cdot E - q \cdot Dp \cdot \mathrm{grad}\ p \tag{8}$$

μn: electron mobility
μp: hole mobility
Dn: electron diffusion coefficient
Dp: hole diffusion coefficient

$$Dn = \mu n \cdot (k_B \cdot T/q) \tag{9}$$

$$Dp = \mu p \cdot (k_B \cdot T/q) \tag{10}$$

T: lattice temperature

Variables to be solved in the above described equations are coulomb potential ψ, the density of electron n, and the hole density p. In addition, in case of transient analysis, time differential component on the carrier density appears to express the equation (5) and the equation (6) as follows.

$$- q\,(\partial n/\partial t) + \text{div } Jn = q \cdot (R\text{-}G) \text{ (electron current continuity equation)} \tag{11}$$

$$+ q\,(\partial p/\partial t) + \text{div } Jp = - q \cdot (R\text{-}G) \text{ (hole current continuity equation)} \tag{12}$$

For the energy transportation model under a steady state, equations as follows, in which equations of energy conservation of carriers (electrons and holes) are added to the equations of the above described drift-diffusion model, are set [Thoma et al. IEEE Transaction on Electron Devices, Vol. 38, No. 6. 1991].

$$+ q\,(\partial p/\partial t) + \text{div } Jp = - q \bullet (R\text{-}G) \text{ (electric charge conservation equation)} \tag{13}$$

$$D = \varepsilon E \tag{14}$$

$$E = -\text{grad}\,\psi \tag{15}$$

$$\rho = q\,(p\text{-}n + N_D - N_A) \tag{16}$$

$$\text{div } Jn = q \bullet (R\text{-}G) \text{ (electron current continuity equation)} \tag{17}$$

$$\text{div } Jp = -q \bullet (R\text{-}G) \text{ (hole current continuity equation)} \tag{18}$$

$$Jn = q \bullet n \bullet \mu n \bullet E + \mu n \bullet (\tau in/\tau^* in) \bullet \text{grad }(n\,k_B\,T^*\,n) \tag{19}$$

$$Jp = q \bullet p \bullet \mu p \bullet E - \mu p \bullet (\tau ip/\tau^* ip) \bullet \text{grad }(p\,k_B\,T^*\,p) \tag{20}$$

T*n: electron temperature
T*p: hole temperature
τin: relaxation time of momentum of electrons
τip: relaxation time of momentum of holes

$$\tau^* in = (1/3)\,m^* n\,\langle Mn^{-1}\rangle\,\tau in \tag{21}$$

$$\tau\text{*ip} = (1/3)\ m\text{*p}\ \langle Mp^{-1} \rangle\ \tau\text{ip} \tag{22}$$

m*n: effective mass of electron
m*p: effective mass of hole
$Mn^{-1}$: reverse effective mass tensor of electron
$Mp^{-1}$: reverse effective mass tensor of hole
< >: average operation in e k space

$$\text{div Sn} = -\ \text{Jn} \bullet \text{grad}\psi - (3/2)\ k_B\ n\ \{\ (T\text{*n-Tneq})\ /\ \tau\text{*wn}\}\ \text{(electron energy conservation equation)} \tag{23}$$

$$\text{div Sp} = +\ \text{Jp} \bullet \text{grad}\psi - (3/2)\ k_B\ p\ \{\ (T\text{*p-Tpeq})\ /\ \tau\text{*wp}\}\ \text{(hole energy conservation equation)} \tag{24}$$

Sn: electron energy flow density (vector quantity)
Sp: hole energy flow density (vector quantity)
Tneq: electron balancing temperature
Tpeq: hole balancing temperature

$$\tau\text{*wn} = (3/2)\ k_B\ (T\text{*n- Tneq})\ \{\tau\text{wn}/(\langle\varepsilon n\rangle\ \langle\varepsilon\ \text{neq}\rangle)\} \tag{25}$$

$$\tau\text{*wp} = (3/2)\ k_B\ (T\text{*p-Tpeq})\ \{\tau\text{wp}/(\langle\varepsilon p\rangle\ \langle\varepsilon\ \text{peq}\rangle)\} \tag{26}$$

<εn>: average electron energy
<εp>: average hole energy
< ε neq>: electron balancing energy
< ε peq>: hole balancing energy
$\tau$ Wn: relaxation time of electron energy
$\tau$ wp: relaxation time of hole energy

$$\text{Sn} = -\ (5/2)\ \{\ (k_B\ T\text{*n})\ /\ q\}\ (\tau\text{*sn}/\tau\text{*in})\ \{+\text{Jn} + (q/m\text{*n})\ \tau\text{in}\ n\ \text{grad}\ (k_B\ T\text{*n})\ \} \tag{27}$$

$$\text{Sp} = -\ (5/2)\ \{\ (k_B\ T\text{*p})\ /q\}\ (\tau\text{*sp}/\tau\text{*ip})\ \{-\text{Jp} + (q/m\text{*p})\ \tau\text{ip}\ p\ \text{grad}\ (k_B\ T\text{*p})\ \} \tag{28}$$

$$\tau\text{*sn} = \{\ (1/3)\ \langle Mn^{-1}\ \varepsilon n+ vn\ vn)\ \}\ /\ \{\ (5/6)\ \langle v\ n^2 \rangle\ \}\bullet \tau\text{sn} \tag{29}$$

$$\tau\text{*sp} = \{\ (1/3)\ \langle Mp^{-1}\ \varepsilon p+vp\ vp\rangle\ \}\ /\ \{\ (5/6)\ \langle v\ p^2 \rangle\ \}\bullet \tau\text{sp} \tag{30}$$

$\tau$ sn: relaxation time corresponding with electron energy flow density Sn
$\tau$ sp: relaxation time corresponding with hole energy flow density Sp
vn: electron velocity
vp: hole velocity

Variables to be solved in the equations on the above described energy transportation model are coulomb potential $\psi$, the density of electron n, the hole density p, the electron temperature T*n and the hole temperature T*p. Here, the reason why "*" is attached to the symbols of the carrier temperatures is to discriminate them from definitions on thermodynamic temperatures as in the following equations.

$$Tn = \{2/ (3\, k_B) \} \langle \varepsilon n \rangle \qquad (31)$$

$$Tp = \{2/ (3\, k_B) \} \langle \varepsilon p \rangle \qquad (32)$$

In order to avoid complications, "*" on Tn and Tp will be omitted in the following descriptions. In addition, in case of transient analysis, time differential component on the carrier density and carrier temperature appears to express the equation (17), the equation (18), the equation (23) and the equation (24) as follows.

$$- q \cdot (\partial n/\partial t) + \text{div } Jn = q \cdot (R\text{-}G) \text{ (electron current continuity equation)} \qquad (33)$$

$$+ q \cdot (\partial p/\partial t) + \text{div } Jp = -q \cdot (R\text{-}G) \text{ (hole current continuity equation)} \qquad (34)$$

$$+ (3/2)\, k_B \{\partial\, (nTn) /\partial\, t\} + \text{div } Sn = - Jn \cdot \text{grad}\psi - (3/2)\, k_B\, n \{ (T^*n\text{-}Tneq) /\tau^*wn\} \text{ (equation of energy}$$

conservation of electron) $\qquad (35)$

$$+ (3/2)\, k_B \{\partial\, (pTp) /\partial\, t\} + \text{div } Sp = - Jp \cdot \text{grad}\psi - (3/2)\, k_B\, p \{ (T^*p\text{-}Tpeq) /\tau^*wp\} \text{ (equation of energy}$$

conservation of hole) $\qquad (36)$

In general, with designated applied biases as boundary conditions, the biases are renewed sequentially so that these five equations of the charge conservation equation, the electron current continuity equation, the hole current continuity equation, the electron energy conservation equation and the hole energy conservation equation are calculated. Since these are non-linear equations, solutions are given by iterative calculation generally called "Newton method." The Newton method is a technique as follows.
Suppose the following equation is given on the variable x.

$$F (x) = 0 \qquad (37)$$

With an initial value $V_0$ having been given, if a value in which a certain variation amount $\delta X_0$ is added to $X_0$ gives a solution, the following equation is valid.

$$F (x_0 + \delta x_0) = 0 \qquad (38)$$

In addition, with $F'(x_0)$ as a differentiation coefficient of $F(x_0)$, $F(x_0 + \delta x_0)$ undergoes Taylor expansion on $\delta x_0$ to be expressed as follows.

$$F (x_0 + \delta x_0) = F (x_0) + F' (x_0)\, \delta x_0 = 0 \qquad (39)$$

$$\delta x_0 = -F (x0) /F' (x_0) \qquad (40)$$

Under the circumstances, this time, $x_1$ is calculated likewise with:

$$x_1 = x_0 + \delta x_0 \qquad (41)$$

If this is repeated subsequently to give $\delta x_i$ in i-th calculation being less than an adequate micro quantity $\varepsilon$

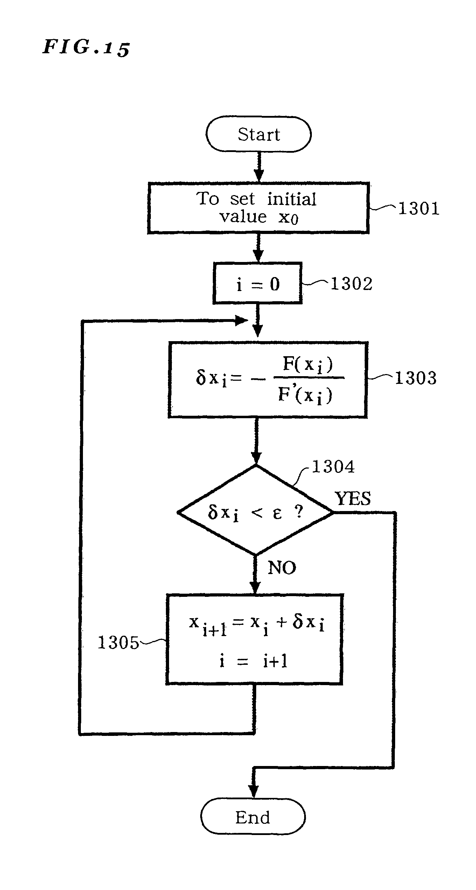

(this is referred to as "to have got convergent" and this judgment hereof is referred to as "convergent judgement", and the micro amount $\varepsilon$ is referred to as "convergent condition"), $x_i$ at that time is the solution of the equation (37). The flow of processing will be a procedure in FIG. 15 as follows.

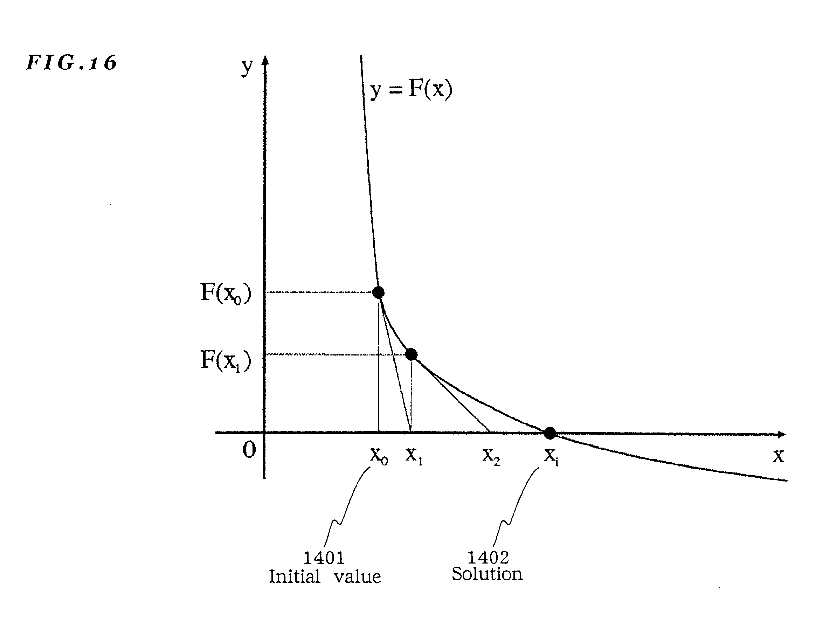

In addition, FIG. 16 is a model view having illustrated this procedure. In case of one dimension, as in FIG. 16, the intersection between a tangent and the x axis as the next x value comes closer to a solution. Closer the given initial value comes to the solution, fewer times of required repetitions will do to give a solution, and thus the calculation time up to obtainment of the solution is short. The technique described above is a Newton method.

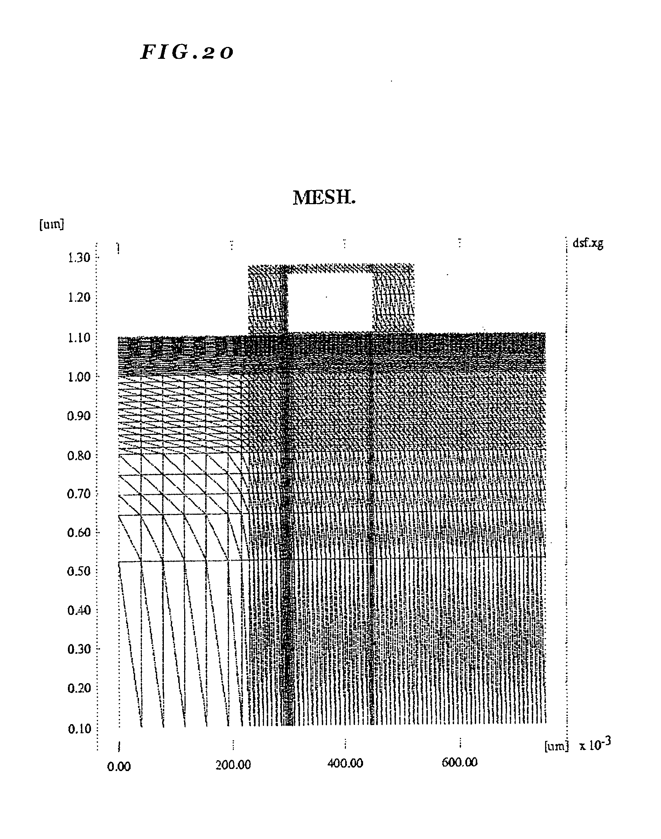

The number of variant of equations was one in description of the above described Newton method. However, in the device simulation, a mesh is created across the analyzed region and equations are set on variants falling in the meshed points. An example of the analysis mesh is shown in FIG. 20. That is, since coulomb potential, the density of electron, the hole density, the electron temperature and the hole temperature appear as variants in a number of the mesh points N, simultaneous equations in 5N units will be solved. The above described electric charge conservation equation, electron current continuity equation, hole current continuity equation, electron energy conservation equation and hole energy conservation equation are expressed in the form in which the right side components thereof were transposed by the following equation.

$$F_{\psi} (\psi, n, p, Tn, Tp) = 0 \text{ (electric charge conservation equation)} \qquad (42)$$

$$Fn(\psi, n, p, Tn, Tp) = 0 \text{ (electron current conservation equation)} \qquad (43)$$

$$Fp (\psi, n, p, Tn, Tp) = 0 \text{ (hole current conservation equation)} \qquad (44)$$

$$F_{Tn} (\psi, n, p, Tn, Tp) = 0 \text{ (electron energy conservation equation)} \qquad (45)$$

$$F_{Tp} (\psi, n, p, Tn, Tp) = 0 \text{ (hole energy conservation equation)} \qquad (46)$$

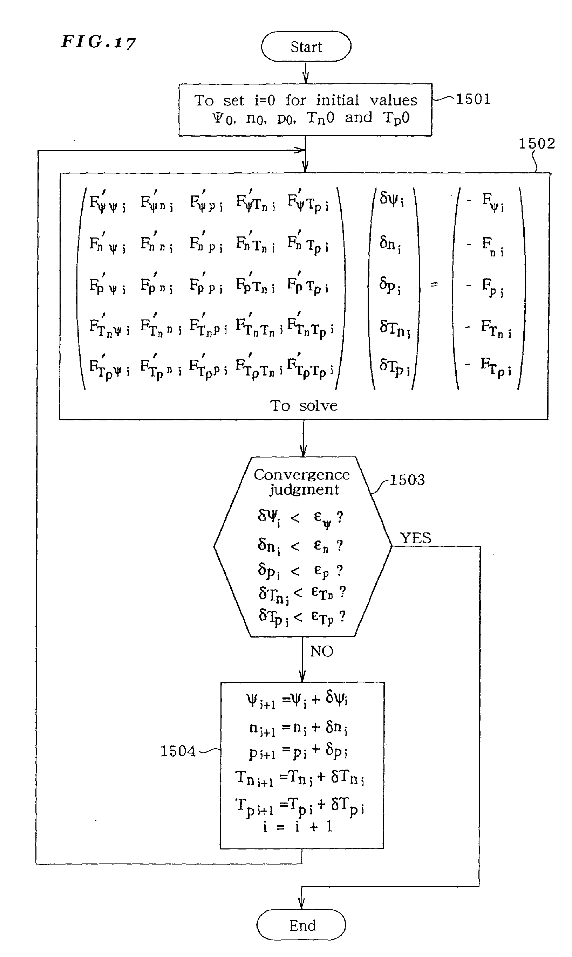

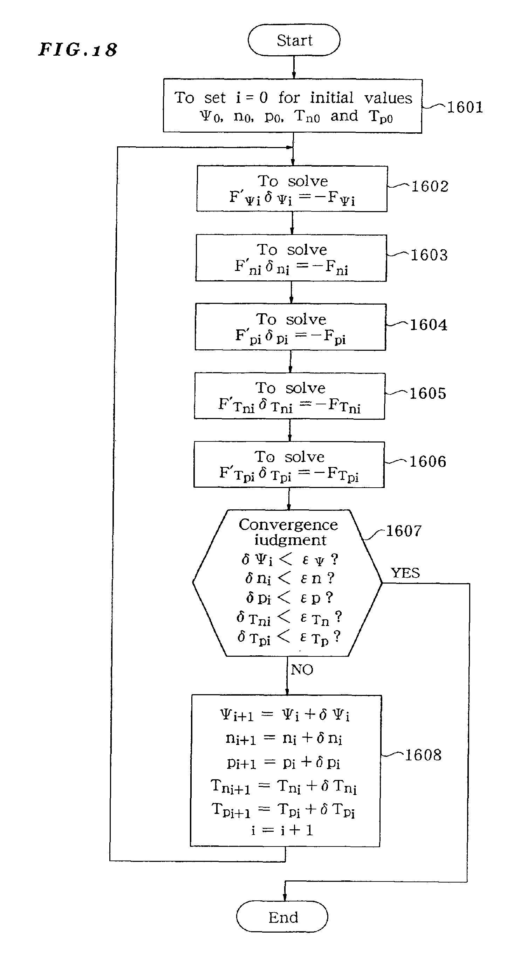

$\psi$, n, p, Tn and Tp in the above described equations respectively represent coulomb potential, the density of electron, the hole density, the electron temperature and the hole temperature, and respective have N units of variants. In this case, there are "coupled method" in which the charge conservation equation, the electron current continuity equation, the hole current conservation equation, the electron energy conservation equation, and the hole energy conservation equation are solved simultaneously and "Gammel method (non-coupled method or decoupled method)" in which the charge conservation equation, the electron current continuity equation, the hole current conservation equation, the electron energy conservation equation, and the hole energy conservation equation are solved separately. The procedure of the coupled method is shown in FIG. 17 while the procedure of the Gammel method is shown in FIG. 18.

In a matrix equation of the process procedure 1502 in FIG. 17, the reference symbol $F'_{\psi n}$ denotes the following partial differentiation.

$$F'_{\psi n} = \partial F_{\psi} / \partial n \qquad (47)$$

Cases of other suffixes are similar. In the coupled method, all the variants are solved simultaneously. In the Gammel method, variants other than the focused one are fixed so as to solve respective equations. For example, in the process procedure for solving the electron energy conservation equation, coulomb potential, the density of electron, the hole density and the hole temperature except the electron temperature are fixed. Matrix calculation is executed for solving the equations by repetition thereof respectively. In one repetition, one matrix of $5N \times 5N$ is solved with the coupled method while five matrixes of $N \times N$ are solved with the Gammel method. The coupled method can give solutions at few iterative times, but sometimes does not converge without good initial values being given for calculation. The Gammel method is not so strongly dependent on initial values, but needs a lot of iterative times. The calculation time for one repetition in the Gammel method is shorter than that in the coupled method, but less iterative times in the coupled method will do than those in the Gammel method. In many cases, the entire calculation time for obtaining the solutions in the coupled method is known to be shorter. Therefore, if only good initial values can be given, the coupled method can execute analysis on a device in a short calculation time.

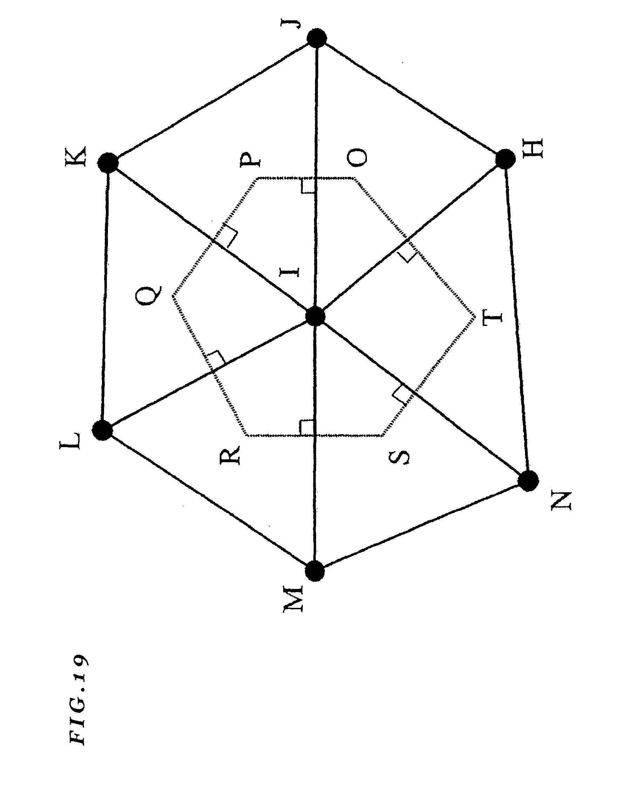

For separation to deform the basic equations to be solved to the equation expressed on the analysis mesh, "control volume method" is used. Taking a portion of the triangular mesh indicated by the bold lines in FIG. 19 as an example, a polygon formed by bisectors of mesh edges brought into connection with mesh points as shown by broken lines in FIG. 19 is a control volume. The top of the polygon of the control volume constitutes the circumcenter (center of a circumscribed circle) of the triangular element of the mesh. In the control volume method, a flow of physical quantity (for example, a current) on the mesh edge IJ is expressed by a quantity by multiplying the density of the flow (for examples, current density) on that edge with the length of the line OP of the control volume (which is referred to as "cross section" also for two dimensional case in general).

[Outline of device simulation with external circuit]

Next, an outline of analysis involving an external circuit will be described. The analysis involving an external circuit is to analyze a state in which a circuit element is brought into connection with electrodes of the device. In addition to the basic equations on the above described device, basic equations on the external circuit are made simultaneous to execute analysis.

The basic equations on the external circuit are circuit equations based on Kirchhoff's law. That is, the first equation is to express on a circuit node brought into focus that a current flowing in from a circuit element in connection is equal to a current flowing out to the circuit element in connection. The second equation is to express on a closed path in a circuit that the total difference of potentials of nodes in the both ends of the circuit element by following the circuit element becomes zero. These are to be expressed by the equation (48).

$$H(V) = 0 \qquad (48)$$

Here, reference character V denotes the physical quantity on the notes of the external circuit, or the physical quantity on the external circuit element. "V" is a variant to be solved in the equation (48).

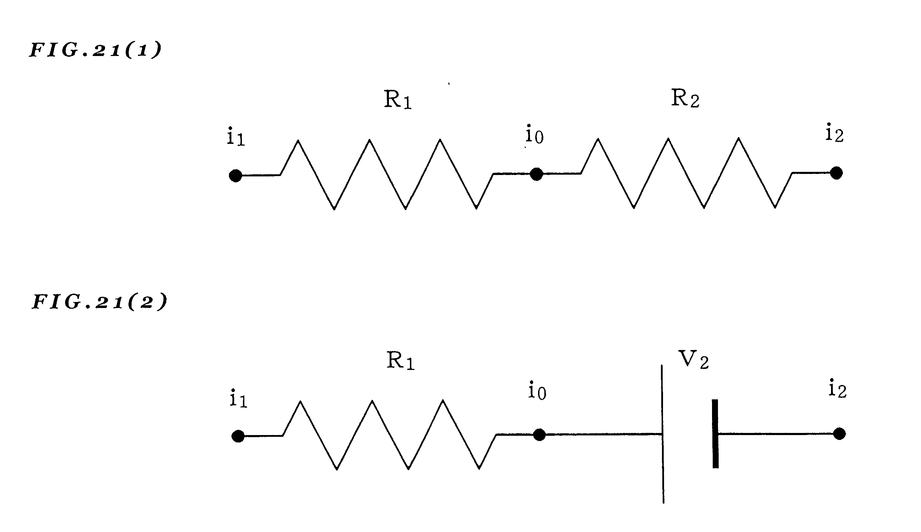

In particular, for example, as having been shown in FIG. 21[1] as a model, in the case where the external circuit nodes $i_0$ and $i_1$ are connected with a resistant with resistivity $R_1$ and the external circuit nodes $i_0$ and $i_2$ are connected with a resistant with resistivity $R_2$, the circuit equation on the circuit node $i_0$ is expressed by the equation (49).

$$\{(1/R_1) - (1/R_2)\}\, Vi_0 - (1/R_1)\, Vi_1 + (1/R_2)\, Vi_2 = 0 \qquad (49)$$

Here, reference characters $V_{i0}$, $V_{i1}$ and $V_{i2}$ respectively denote potentials external circuit nodes $i_0$ $i_1$ and $i_2$. These $V_{i0}$, $V_{i1}$ and $V_{i2}$ are equivalent to the variant V to be solved in the equation (48).

Incidentally, when a voltage source or conducting wires to short-circuit the nodes are used as circuit elements, the number of circuit equations will be greater than the number of circuit nodes. In particular, for example, as having been shown in FIG. 21[2] as a model, in the case where the external circuit nodes $i_0$ and $i_1$ are connected with a resistant with resistivity $R_1$ and the external circuit nodes $i_0$ and $i_2$ are connected with a voltage source with a voltage $V_2$, the circuit equation on the circuit node $i_0$ is expressed by the equation (50) and the equation (51).

$$(1/R_1)\, Vi_0 - (1/R_1)\, Vi_1 + Iv_2 = 0 \qquad (50)$$

$$Vi_0 - Vi_2 - V_2 = 0 \qquad (51)$$

Here, reference character $I_{v2}$ denotes a current flowing from the circuit node $i_0$ in the direction of $i_2$ in the voltage source $V_2$. In this case, $V_{i0}$, $V_{i1}$, $V_{i2}$ and $I_{v2}$ are equivalent to the variant V to be solved in the equation (48). Incidentally, connection with a conducting wire is equivalent to connection with a voltage source with a voltage value being zero.

With symbols used in the description of the basic equations on the above described device, basic equations in the case where analysis involving an external circuit in the drift-diffusion model will be the following four kinds of simultaneous equations.

$$F_\psi\ (\psi,\ n,\ p) = 0 \ \text{(electric charge conservation equation)} \tag{52}$$

$$Fn\ (\psi,\ n,\ p) = 0 \ \text{(electron current conservation equation)} \tag{53}$$

$$Fp\ (\psi,\ n,\ p) = 0 \ \text{(hole current conservation equation)} \tag{54}$$

$$H\ (V) = 0 \ \text{(circuit equation)} \tag{55}$$

This case will give rise to $3N+N_H$ units of simultaneous equations with N being the number of mesh nodes of the device and $N_H$ being the number of circuit equations of the external circuit.

Likewise, basic equations in case of executing analysis involving an external circuit in the energy transportation model will be following six kinds of simultaneous equations.

$$F_\psi\ (\psi,\ n,\ p,\ Tn,\ Tp) = 0 \ \text{(electric charge conservation equation)} \tag{56}$$

$$Fn\ (\psi,\ n,\ p,\ Tn,\ Tp) = 0 \ \text{(electron current conservation equation)} \tag{57}$$

$$Fp\ (\psi,\ n,\ p,\ Tn,\ Tp) = 0 \ \text{(hole current conservation equation)} \tag{58}$$

$$F_{Tn}\ (\psi,\ n,\ p,\ Tn,\ Tp) = 0 \ \text{(charge energy conservation equation)} \tag{59}$$

$$F_{Tp}\ (\psi,\ n,\ p,\ Tn,\ Tp) = 0 \ \text{(hole energy conservation equation)} \tag{60}$$

$$H\ (V) = 0 \ \text{(circuit equation)} \tag{61}$$

This case will give rise to $5N+N_H$ units of simultaneous equations with N being the number of mesh nodes of the device and $N_H$ being the number of circuit equations of the external circuit.

Next, solution of the basic equations involving external circuit will be described.

The first technique of the solution in the basic equations of the analysis involving the external circuit is a technique to solve the basic equations of the device portion by fixing the coulomb potential of the node on the device electrode, solve the basic equations of the external circuit portions with the device electrode current as the result thereof being a boundary condition, and repeat these until convergence is attained [Technical Reports of Academy of Electronic Information and Communication, page 77, in pp.75-80, VLD95-77, ED95-98, SDM95-138 (1995-09),]. This technique is called as "non-coupled method" as the Gammel method (non-coupled method or the decoupled method) used also in the solution of the basic equations of the device. Since this technique must execute a number of calculations of the basic equations of the device portions, it takes an extreme period of time for calculation, which is not practical at all.

The second technique of the solution in the basic equations of the analysis involving the external circuit is a technique to solve the basic equations of the device portion by fixing the coulomb potential of the node on the device electrode, replace the device with an equivalent conductance and a current source based on the result thereof, and solve the basic equations of the circuit made of that equivalent circuit and the external circuit portions with the device electrode current, and repeat these until convergence is attained. This technique is called as "second stage Newton method". It is known that this method takes calculation time for transient analysis [Technical Reports of Academy of Electronic Information and Communication, page 77, in pp.75-80 VLD95-77,ED95-98,SDM95-138(1995-09)]. Many of analysis involving an external circuit are in many cases transient analysis such as for checking chronological change of external circuit node potential. Therefore, this technique will be disadvantageous on this point.

The third technique of the solution in the basic equations of the analysis involving the external circuit is a technique to solve the basic equations of the device portion and the basic equations of the external circuit portion simultaneously. This technique is called as "coupled method" as the "coupled method (coupled method) having been also used for the solution of the basic equations of the device. In general, this technique can give solutions in a short calculation time than in the first technique or the second technique described above if good initial values can be given as described in the section on the solution of the basic equations of the device.

BRIEF SUMMARY OF THE INVENTION

Object of the Invention

However, in the case where the analysis is proceeded by using the third technique in the analysis method involving the above described external circuit, with the prior art pattern to give the initial values will give not too good initial values, and thus the calculation time until the solution is acquired will become large, or a lot of calculation time will be spent to give good initial values, which used to be a problem.

That is, the prior art technique A giving this initial value gives a solution in a thermal balanced state on a variant of the basic equations of the device portion, and gives zero in the basic equations of the external circuit portion. In many cases of analysis involving an external circuit, it is uncommon that the initial analysis biases are all zero, but in most cases any value of bias is applied. Thus, the initial value by this technique A is far from the solution, and convergence is slow, and this will elongate the calculation time.

In addition, the prior art technique B giving the initial value is to execute calculation with two-stage Newton method being the second technique in the basic equations of the analysis involving the above described external circuit so as to give the result thereof as an initial value. This technique B requires a lot of calculation time until the initial values are given since calculation of the basic equations of the device portion must be executed at least twice only for judging the convergence error by comparing the results at the time of iterative calculation this time with the results at the time of iterative calculation for the previous time in the calculation of the two-stage Newton method for giving the initial values.

Under the circumstances, an object of the present invention is to provide, in an analysis involving an external circuit, a device simulation that has shortened the entire calculation time until the solution is given by giving good initial values in a short calculation time.

[Means to solve programs]

A device simulation apparatus as set forth in claim 1 is the one which executes transient analysis of a device involving an external circuit. And it is characterized by comprising presumed potential designation means for a user to designate a presumed potential in a first analysis bias of the above described device electrode nodes; physical quantity initial value setting means to acquire a physical quantity by analyzing the above described presumed potential as boundary conditions on the above described device, from which the above described external circuit has been removed, to set the above described physical quantity as the initial value of the physical quantity at the internal nodes in the above described device; potential initial value setting means to set an initial value of potential at nodes of the above described external circuit based on already known potential and the above described presumed potential; and device analysis means to analyze a device involving the above described external circuit with the above described respective initial values set by this potential initial value setting means and the above described physical quantity initial value setting means.

A device simulation apparatus as set forth in claim 2 is the one which executes steady analysis of a device involving an external circuit. And it is characterized by comprising presumed potential designation means for a user to designate a presumed potential in one or more analysis bias(es) of the above described device electrode nodes; physical quantity initial value setting means to acquire a physical quantity by analyzing the above described presumed potential as boundary conditions on the above described device, from which the above described external circuit has been removed, to set the above described physical quantity as the initial value of the physical quantity at the internal nodes in the above described device; potential initial value setting means to set an initial value of potential at nodes of the above described external circuit based on already known potential and the above described presumed potential; and device analysis means to analyze a device involving the above described external circuit with the above described respective initial values set by this potential initial value setting means and the above described physical quantity initial value setting means.

In addition, respective components in the device simulation apparatus as set forth in claim 1 or claim 2 may be embodied as follows.

The above described presumed potential is a voltage of an upper level or a lower level of digital signals (claim 3). The above described physical quantity is coulomb potential, the density of electron, the hole density, electron temperature and hole temperature (claim 4). The above described physical quantity initial value setting means use the coupled method or the Gammel method for analysis (claim 5). The above described known potential is voltage source potential or ground potential (claim 6). The above described potential initial value setting means use circuit equations based on the Kirchhoff's law to set the above described initial values (claim 7). Incidentally, two or more of any of these embodied components may be combined. In addition, these embodied components may be applied to the following device simulation method or storage medium.

The device simulation method as set forth in to claim 8, which executes transient analysis on a device involving an external circuit, is used in a device simulation apparatus as set forth in claim 1. That is, it is characterized by comprising a procedure for a user to designate a presumed potential in a first analysis bias of the above described device electrode nodes; a procedure to acquire a physical quantity by analyzing the above described presumed potential as boundary conditions on the above described device, from which the above described external circuit has been removed, to set the above described physical quantity as the initial value of the physical quantity at the internal nodes in the above described device; a procedure to set an initial value of potential at nodes of the above described external circuit based on already known potential and the above described presumed potential; and a procedure to analyze a device involving the above described external circuit with the set above described respective initial values.

The device simulation method as set forth in claim 9, which executes steady analysis on a device involving an external circuit, is used in a device simulation apparatus as set forth in claim 2. That is, it is characterized by comprising a procedure for a user to designate a presumed potential in one or more analysis bias(es) of the above described device electrode nodes; a procedure to acquire a physical quantity by analyzing the above described presumed potential as boundary conditions on the above described device, from which the above described external circuit has been removed, to set the above described physical quantity as the initial value of the physical quantity at the internal nodes in the above described device; a procedure to set an initial value of potential at nodes of the above described external circuit based on already known potential and the above described presumed potential; and a procedure to analyze a device involving the above described external circuit with the set above described respective initial values.

The storage medium as set forth in claim 10 is a storage medium that can be read out by a computer and in which a device simulation program has been stored to function the computer as respective means for the device simulation apparatus as set forth in claim 1. The storage medium according to claim 11 is a storage medium that can be read out by a computer and in which a device simulation program has been stored to function the computer as respective means for the device simulation apparatus according to claim 2.

That is, the device simulation program is stored in a storage medium such as, for example, DVD-ROM, CD-ROM, and a semiconductor memory, etc. to be provided. In addition, that device simulation program controls operations of a computer. Moreover, that computer controlled by the program executes a particular procedure ordered by the device simulation program.

The foregoing will be described again in other words. The device simulation related to the present invention has a process procedure for a user to designate a presumed potential at the nodes of the above described device electrode in operation bias; a process procedure to execute analysis on the above described device, on which the above described external circuit is not mounted with the above described presumed potential as boundary conditions to set the acquired physical quantity as the initial value of the physical quantity at the nodes inside the device for analysis involving an external circuit; a process procedure to trace the external circuit from the nodes on the device electrodes to the ground nodes and set an initial value of potential on external circuit nodes from the above described presumed potential and the voltage source voltage of the operation bias of the boundary conditions; and a process procedure to execute analysis involving an external circuit with the above described initial values. This will enable to give a solution in a shorter calculation time in the analysis involving the external circuit.

BRIEF DESCRIPTION OF THE DRAWINGS

This above-mentioned and other objects, features and advantages of this invention will become more apparent by reference to the following detailed description of the invention taken in conjunction with the accompanying drawings, wherein:

FIG. 1 is a function block diagram showing a first embodiment of a device simulation apparatus related to the present invention;
FIG. 2 is a flow chart showing operation of the device simulation apparatus in FIG. 1;
FIG. 3 is a model view showing an nMOS inverter used in the device simulation apparatus in FIG. 1;
FIG. 4 is a circuit diagram showing an nMOS inverter in FIG. 3;
FIG. 5 is a graph comparing convergence performance in transient analysis on an nMOS inverter in a technique of the present invention (the first embodiment) with that of a prior art technique;
FIG. 6 is a graph showing an output waveform as well as an input waveform as a result of the transient analysis of the nMOS inverter in the first embodiment;

FIG. 7 is a model view of a CMOS inverter used in a second as well as a third embodiment of a device simulation apparatus related to the present invention;

FIG. 8 is a circuit diagram showing a CMOS inverter in FIG. 7;

FIG. 9 is a graph comparing convergence performance in transient analysis on a CMOS inverter in a technique of the present invention (the second embodiment) with that of a prior art technique;

FIG. 10 is a graph showing an output waveform as well as an input waveform as a result of the transient analysis of the CMOS inverter in the second embodiment;

FIG. 11 is a function block diagram showing a third embodiment of a device simulation apparatus related to the present invention;

FIG. 12 is a flow chart showing operation of the device simulation apparatus in FIG. 11;

FIG. 13 is a graph comparing convergence performance in steady analysis on a CMOS inverter in a technique of the present invention (the third embodiment) with that of a prior art technique;

FIG. 14 is a graph showing an input voltage source voltage as well as an output node potential as a result of the steady analysis of the CMOS inverter in the third embodiment;

FIG. 15 is a flow chart showing the Newton method;

FIG. 16 is a model view showing appearance of processing of the Newton method;

FIG. 17 is a flow chart showing the coupled method;

FIG. 18 is a flow chart showing the Gammel method;

FIG. 19 is a model view showing the control volume;

FIG. 20 is a model view showing an example of an analysis mesh; and

FIG. 21 is a circuit diagram showing a portion of an external circuit, breaking down to a first example in FIG. 21[1] and a second example in FIG. 21[2].

## DETAILED DESCRIPTION OF THE PREFERRED EMBODIMENTS

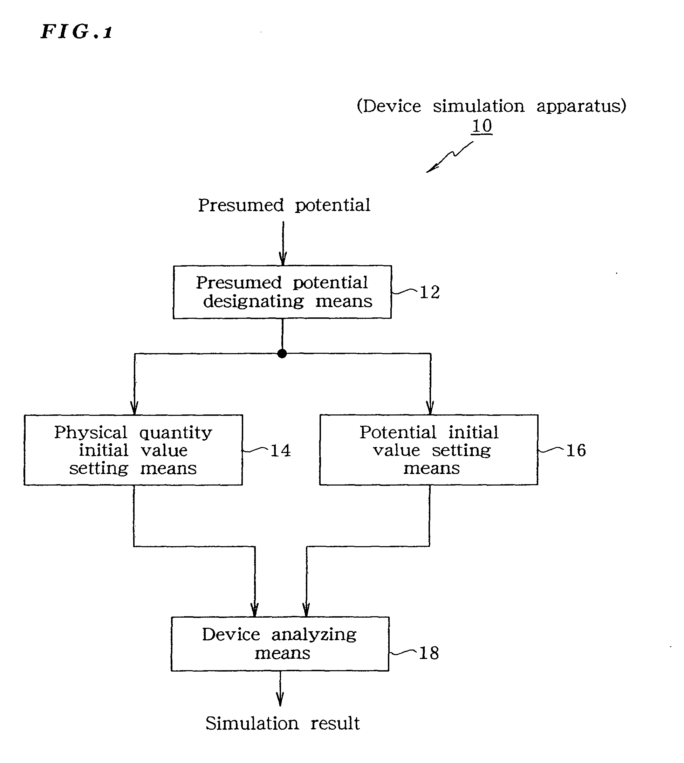

FIG. 1 is a function block diagram showing a first embodiment of a device simulation apparatus related to the present invention. This drawing will be used for description as follows.

A device simulation apparatus 10 of the present embodiment is to execute transient analysis on a device involving an exterior circuit. And, it comprises presumed potential designation means 12 for a user to designate a presumed potential in a first analysis bias of device electrode nodes; physical quantity initial value setting means 14 to acquire a physical quantity by analyzing the above described presumed potential as boundary conditions on a device, from which an external circuit has been removed, to set the above described physical quantity as the initial value of the physical quantity at the internal nodes in the device; potential initial value setting means 16 to set an initial value of potential at nodes of the external circuit based on already known potential and the above described presumed potential;, and device analyzing means 18 to analyze a device involving an external circuit with the above described respective initial values set by the physical quantity initial value setting means 14 and the potential initial value setting means 16.

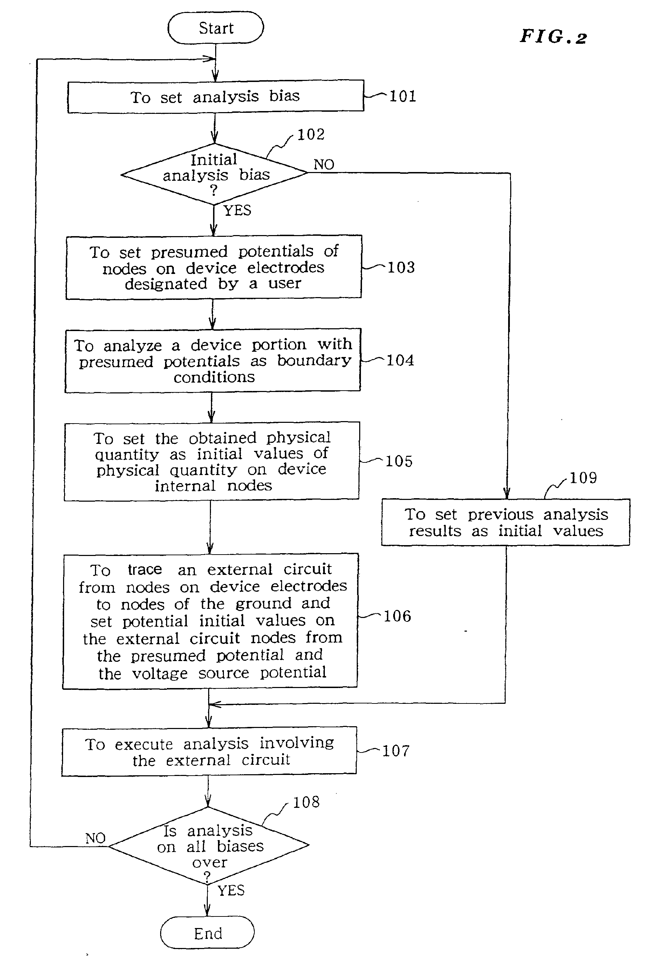

FIG. 2 is a flow chart showing operation of the device simulation apparatus in FIG. 1. This drawing will be used for description as follows.

Firstly, a bias to be analyzed is set (Step 101). In the case of steady analysis, the bias to be analyzed is given as a set of values of a voltage source or a current source, and they are set one by one so that analysis is proceeded with. In the case of transient analysis, the bias to be analyzed is given as a set of values of a voltage source or a current source at a designated point of time, and the period sandwiched by those designated time point are divided appropriately so that biases corresponding to those time points are set for analysis to be proceeded with. A first bias of transient analysis, that is, analysis on the bias at the time point zero to be executed is steady analysis.

Subsequently, it is checked whether or not the set analysis bias is a first analysis bias (Step 102). In the case where it is not the first bias, the state goes forward to Step 109 so that the result of analysis on the previous analysis bias is set as the initial value. On the other hand, in the case where it is the first bias, the state goes forward to processing of Step 103 and onward.

Subsequently, for nodes on the device electrode of a device involving an external circuit to be analyzed, the potential value which a user to execute analysis has presumed in advance is set (Step 103). Normally, as for an analysis involving an external circuit, in many cases an initial state of the analysis is known. For example, for analysis on operation of an inverter circuit, the initial state of the analysis is in a High state or a Low state, and it is in common to check how the state shifts to a Low state or a High state according to changes in the input bias. That is, it is possible for the user to presume potential of nodes on a device electrode.

Subsequently, with presumed potential as boundary condition, the device portion is analyzed (Step 104). Analysis of this device portion is analyzed with the coupled method or the Gammel method, which has been described in the section on analysis of the drift-diffusion model and the energy transportation model.

Subsequently, the resulting physical quantity given in Step 104, that is, the coulomb potential, the carrier density, and the carrier temperature, etc. is set as the initial value of physical quantity on the nodes inside the device (Step 105).

Subsequently, the external circuit is traced from the nodes on the device electrodes to the ground (GND) nodes and an initial value of potential on external circuit nodes from the designated presumed potential designated at Step 103 and the voltage source potential is estimated and set (Step 106). This procedure corresponds with analysis only on the circuit equations of the external circuit portion with the electrode nodes as a fixed boundary.

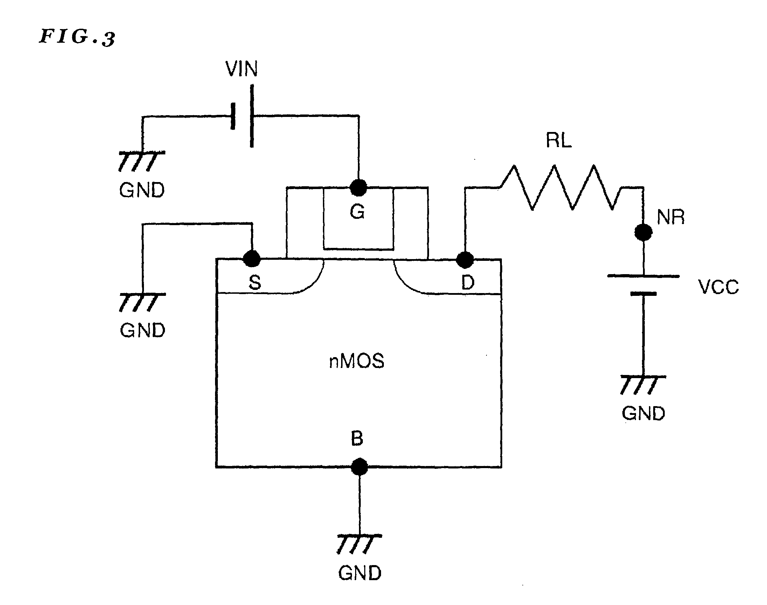

Steps 103 to 106 so far will be described in an embodied fashion by taking as an example an nMOS inverter circuit of the resistant lode having been shown in FIG. 3.

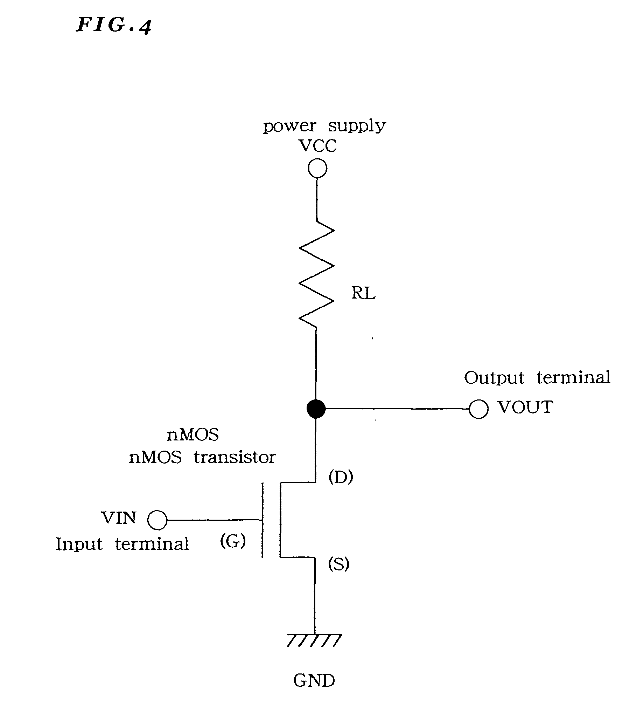

FIG. 3 shows a device involving an external circuit as a model. The circuit diagram expressed in a general illustrative method is expressed as in FIG. 4. An input terminal VIN, an output terminal VOUT and a power supply VCC in FIG. 4 correspond with the positive side node (G) of the voltage source VIN, the drain node (D) of the nMOS device, the positive node (NR) of the voltage source VCC in FIG. 3 respectively.

As an example, transient analysis when an input is changed to High from the state with a Low input VIN and a High output is considered. Here, an analysis with the resistant RL being set at 1[MΩ] is considered by increasing the bias of VIN to 2.5[V] in 1[ns] with the initial analysis bias being 0.0[V] for the bias of input voltage source VIN and 2.5 [v] for the bias of VCC. At this time, in the initial analysis bias, since the input is Low, the potential of the gate electrode (G) can be guessed to be 0[V], and since the output is High, the potential of the drain electrode (D) can be guessed to be 2.5[V]. In addition, it is obvious that the potentials of the source electrode (S) and the substrate electrode (B) are 0[V]. Therefore, Step 103 can be executed.

Thus, the bias of nodes on the electrodes of the device portion can be given, and therefore with these as fixed boundary conditions, the device portion can be analyzed. This is the process of Step 104. The physical quantity of the analysis results is set as the initial value of the physical quantity of the device internal nodes. This is the process of Step 105.

Subsequently, with the bias of the device electrodes being given, these nodes can be regarded as the potential fixed nodded, connections of the external circuit be traced up to the ground (GND so that the potential of the external circuit connection point on the way can be guessed. In the case of the example here, only NR is the node with a potential not yet fixed, and therefore, the circuit equation on the external circuit node NR only should be established so that the solution may be given. That is, the following equation is solved.

$$(1/R_{RL})\ V_{NR} - (1/R_{RL})\ V_D - I_{VCC} = 0 \qquad (62)$$

$$V_{NR} - V_{GND} = V_{VCC} \qquad (63)$$

As a result hereof, the potential of the node NR $V_{NR} = V_{VCC} = 2.5[V]$ is given. Thus, for all the nodes of the external circuit, the presumed values of the potentials are given. These are set as the initial values of the device analysis involving the external circuit. This is the process of Step 106.

Since necessary initial values have been obtained with the processing up to Step 106 so far, subsequently analysis on the device involving an external circuit is executed. Here, due to availability of good initial values, the adoption of the coupled method makes it possible to execute analysis in shorter calculation time than with the Gammel method, and therefore the coupled method is used. This is the process of Step 107.

Subsequently, checking whether or not the analysis biases are all analyzed, and if there are any to be analyzed, the process from Step 101 and onward will be executed. On the other hand, when all the analysis biases are solved, the process comes to an end. This is the process of Step 108.

In addition, if the initial analysis biases have been solved, the time ticking interval can be notched appropriately to a short extent in the case of transient analysis in particular, the solution for analysis of the subsequent analysis bias can be made available comparatively easily, and therefore for the initial values, the analysis results of the previous time will be used. This is the process of Step 109.

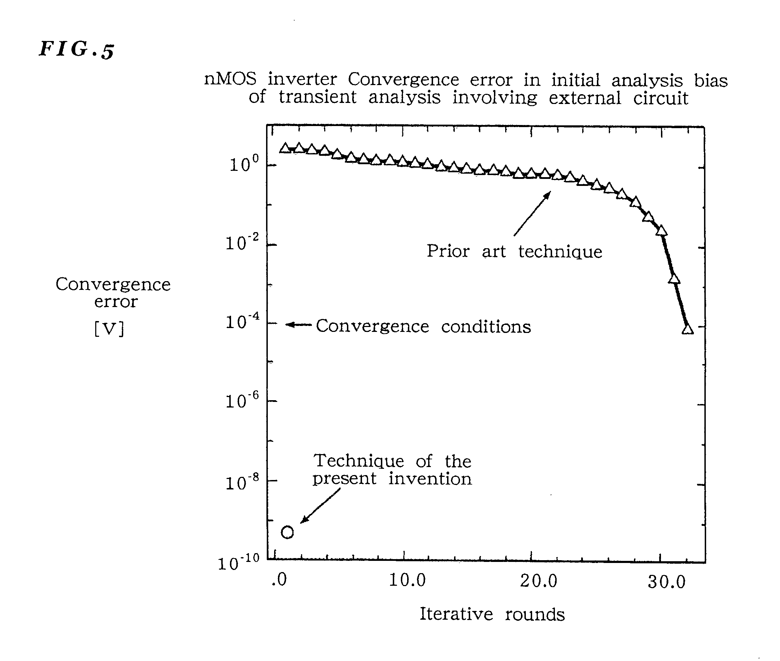

For the technique of the present invention and the prior art technique to set thermal balanced values as the initial value, a graph on convergence errors and iterative rounds of the initial analysis biases is shown in FIG. 5. In this example, the convergence condition for convergence error of coulomb potential is set at $10^{-4}$[V]. In the prior art technique, 32 repetitions are required, but in the technique of the present invention, convergence takes place at one time. In addition, in the prior art technique, the calculation time inclusive of the initial value setting process to obtain the solution of the initial analysis biases was 7.2 times longer than that in the technique of the present invention. Thus, the initial value setting according to the technique of the present invention is largely effective for shortening calculation time.

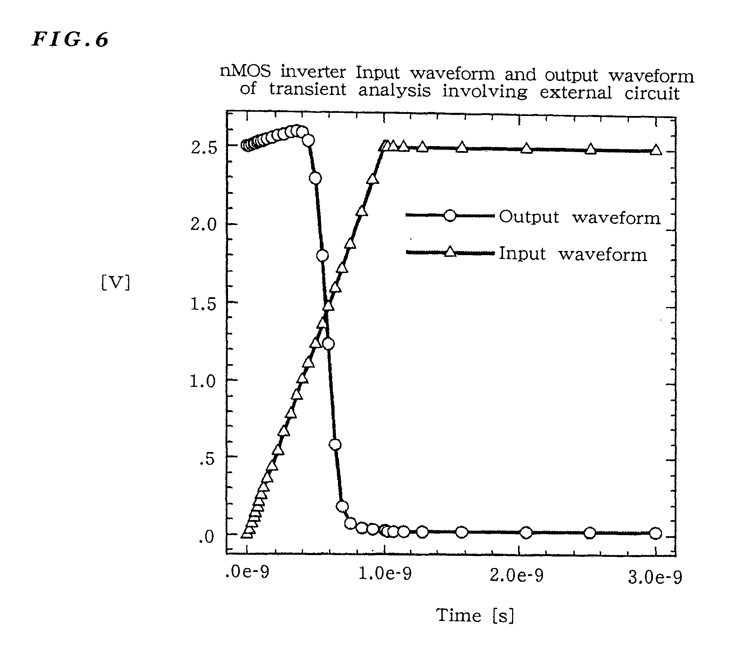

Incidentally, for a reference, the input waveform (chronological change in voltage of the voltage source VIN) and the output waveform (chronological change in voltage of the node D) of the analysis results of this example are shown in FIG. 6. Redundantly, the technique of the present invention as well as the prior art technique gives rise to the same calculation results within the range of convergence error.

Next, a second embodiment of the device simulation apparatus related to the present invention will be described. However, the function block diagram as well as the flow chart is the same as in the first embodiment, description thereon will be omitted.

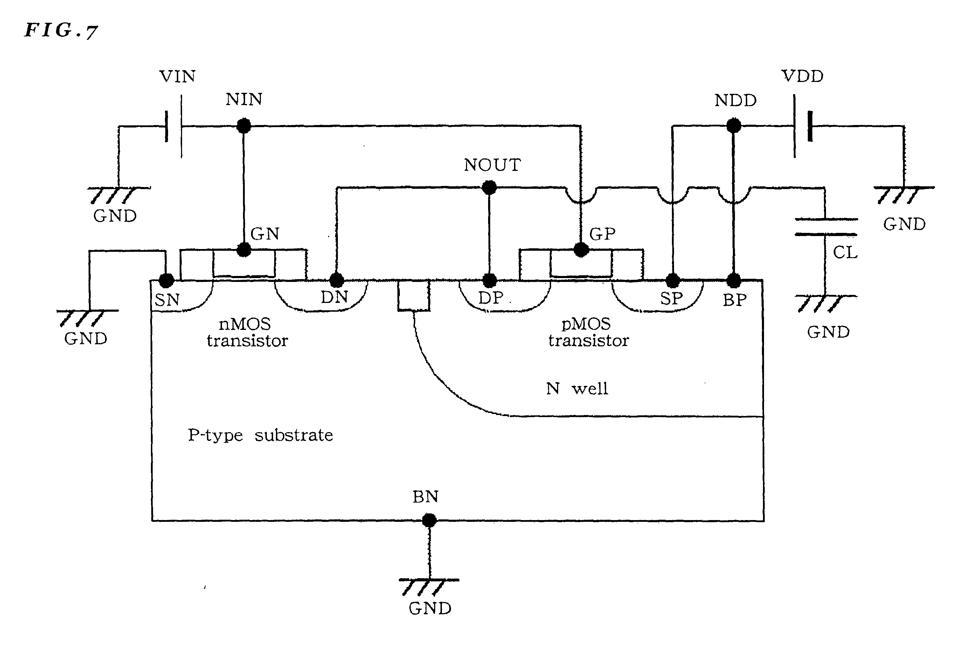

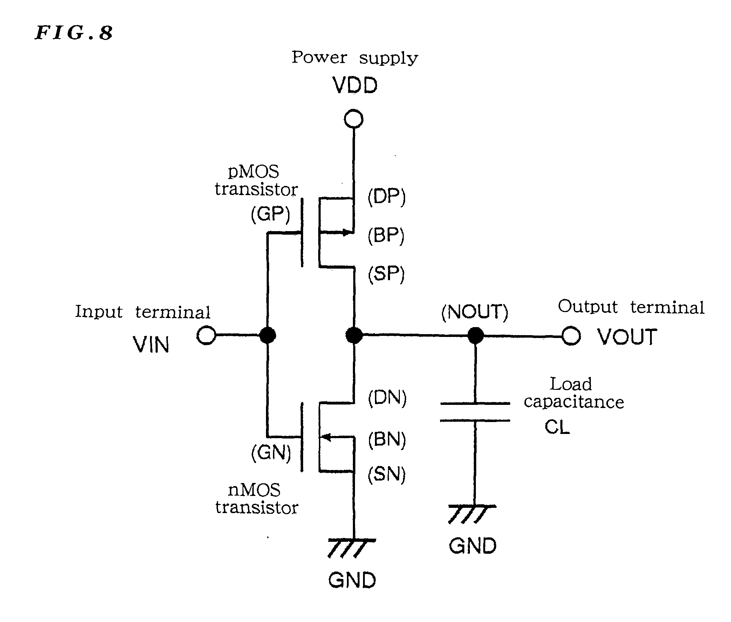

The present embodiment relates to the transient analysis on a CMOS inverter as a device involving an external circuit as shown as a model in FIG. 7. FIG. 7, which is expressed in a general illustrative method for a circuit, will be as in FIG. 8. An input terminal VIN, an output terminal VOUT and a power supply VDD in FIG. 8 correspond with the positive side node (NIN) of the voltage source VIN in FIG. 7, the node (NOUT) connecting the drain electrodes (DN, DP) of the nMOS transistor and pMOS transistor, the positive side node (NDD) of the voltage source VDD respectively.

As an example, transient analysis when an input is changed to High from the state with a Low input VIN and a High output is considered. Here, an analysis with the load capacitance CL being set at 0.1[pF] is considered by increasing the bias of VIN to 5.0[V] in 0.5[ns] with the initial analysis bias being 0.0[V] for the bias of input voltage source VIN and 5.0[v] for the VDD.

At this time, in the initial analysis bias, since the input is Low, the potential of the gate electrode (GN, GP) of the nMOS transistor and the pMOS transistor can be guessed to be 0[V]. In addition, since the output is High, the potential of the drain electrode (DN, DP) of the nMOS transistor and the pMOS transistor can be guessed to be 5.0 [V]. In addition, it is self-evident that the potential of the source electrode (SP) and the N-well electrode (BP) of the pMOS transistoris 5.0[V] and the potential of the source electrode (SN) and the N-well electrode (BN) of the nMOS transistor is 0[V]. Therefore, Step 103 can be executed.

Thus, the bias of nodes on the electrodes of the device portion can be given, and therefore with these as fixed boundary conditions, the device portion can be analyzed. This is the process of Step 104 of the present invention. The physical quantity of the analysis results is set as the initial value of the physical quantity of the device internal nodes. This is the process of Step 105 of the present invention.

Subsequently, with the bias of the device electrodes being given, these nodes can be regarded as the potential fixed nodded, connections of the external circuit be traced up to the ground (GND) so that the potential of the external circuit connection point on the way can be guessed. In the example here, NIN, NOUT, NDD are the nodes with potentials not yet fixed, and therefore, the circuit equations on these external circuit nodes should be established so that the solution may be given. That is, the following equations are solved.

$$V_{NIN}-V_{GND} = V_{VIN} \tag{64}$$

$$V_{NIN}-V_{GN} = 0 \tag{65}$$

$$V_{NIN}-V_{GP} = 0 \tag{66}$$

$$V_{NOUT}-V_{DN} = 0 \tag{67}$$

$$V_{NOUT}-V_{DP} = 0 \tag{68}$$

$$V_{NDD}-V_{GND} = V_{VDD} \tag{69}$$

$$V_{NDD}-V_{SP} = 0 \tag{70}$$

$$V_{NDD}-V_{BP} = 0 \tag{71}$$

Here, the initial analysis bias of transient analysis is an analysis at the time zero, which will be a steady analysis, connection with the load capacitance CL can be treated as being cut off. Accordingly, in the above described equations, no circuit equations on connection by the load capacitance CL appear.

As a result hereof, the potential of the node NIN $V_{NIN}=V_{VIN}=0.0[V]$, the potential of the node NOUT $V_{NOUT}=$ =5.0[V] and the potential of the node NDD $V_{NDD} = 5.0$ [V] are given. Thus, for all the nodes of the external circuit, the presumed values of the potentials are given. These are set as the initial values of the device analysis involving the external circuit. This is the process of Step 106 of the present invention. Since the process described so far has availed necessary initial values, hereafter the device analysis involving an external circuit sill be executed as in the first embodiment so that the solution is given.

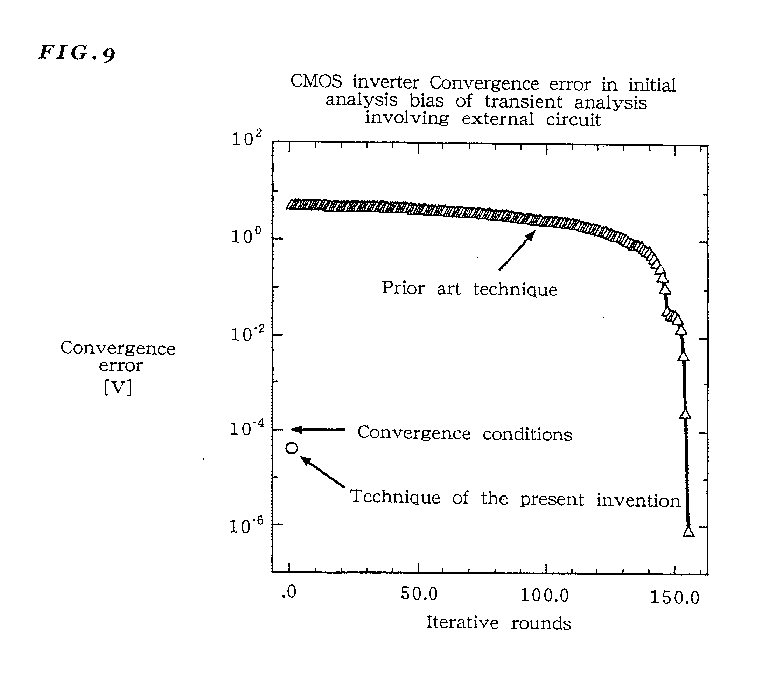

For the technique of the present invention and the prior art technique to set thermal balanced values as the initial value, a graph on convergence errors and iterative rounds of the initial analysis biases is shown in FIG. 9. In this example, the convergence condition for convergence error of coulomb potential is set at $10^{-4}[V]$. In the prior art technique, 155 repetitions are required, but in the technique of the present invention, convergence takes place at one time.

In addition, in the prior art technique, the calculation time inclusive of the initial value setting process to obtain the solution of the initial analysis biases was 25.6 times longer than that in the technique of the present invention. Thus, also in this example, the initial value setting according to the technique of the present invention is largely effective for shortening calculation time.

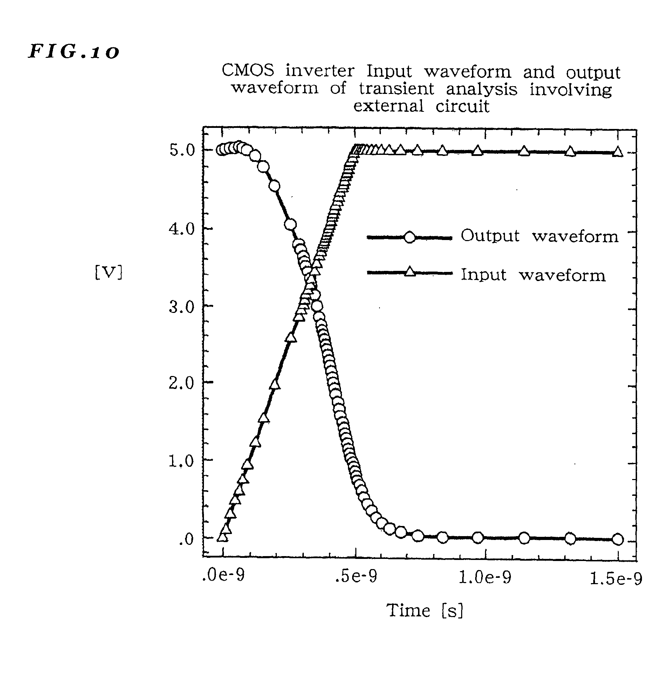

Incidentally, for a reference, the input waveform (chronological change in voltage of the voltage source VIN) and the output waveform (chronological change in voltage of the node NOUT) of the analysis results of this example are shown in FIG. 10.

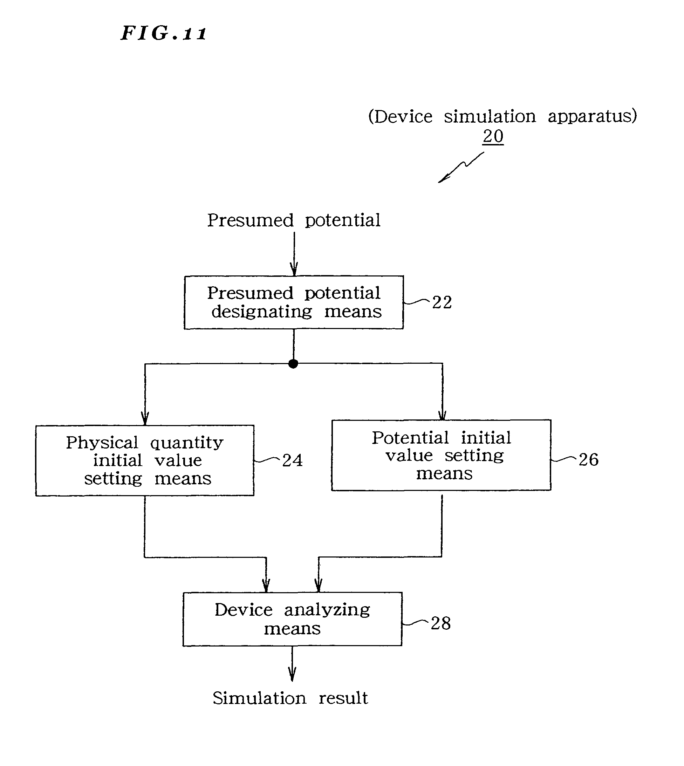

FIG. 11 is a function block diagram showing a third embodiment of a device simulation apparatus related to the present invention. This drawing will be used for description as follows.

A device simulation apparatus 20 of the present embodiment is to execute steady analysis on a device involving an exterior circuit. And, it comprises presumed potential designation means 22 for a user to designate presumed potentials in one or more analysis bias of device electrode nodes; physical quantity initial value setting means 24 to acquire a physical quantity by analyzing the above described presumed potential as boundary conditions on a device, from which an external circuit has been removed, to set the above described physical quantity as the initial value of the physical quantity at the internal nodes in the device; potential initial value setting means 26 to set an initial value of potential at nodes of the external circuit based on already known potential and the above described presumed potential;, and device analyzing means 28 to analyze a device involving an external circuit with the above described respective initial values set by the physical quantity initial value setting means 24 and the potential initial value setting means 26.

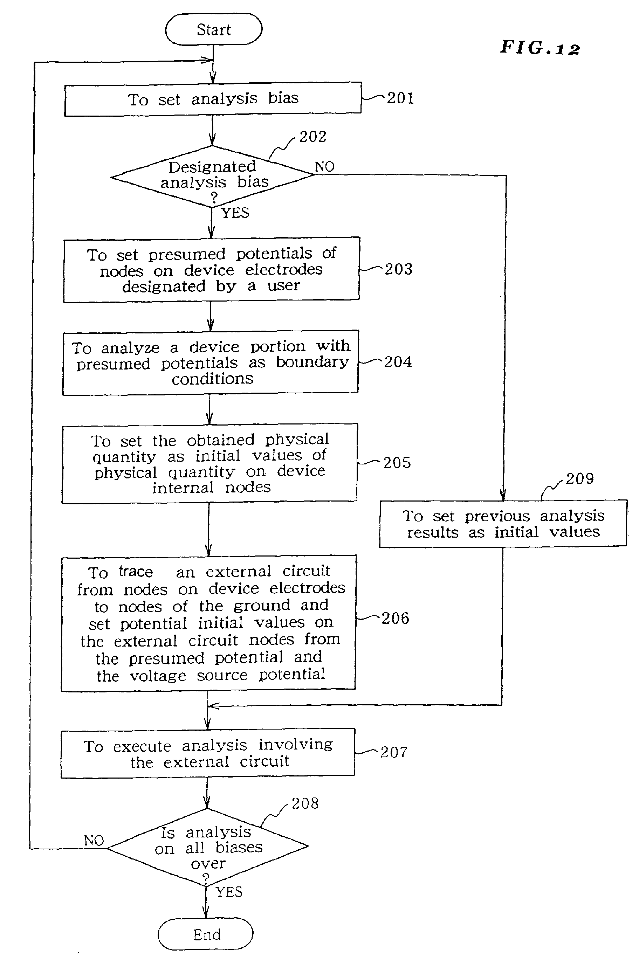

FIG. 12 is a flow chart showing operation of the device simulation apparatus in FIG. 11. This drawing will be used for description as follows.

The case where the bias to be changed in the analysis is single is similar to the first embodiment. That is, as an analysis bias to execute the potential presuming process, an initial analysis bias is designated, and for the initial analysis bias in Step 202 a process of Steps 203 to 206 is executed. The contents of these processes are similar to those of the first embodiment. For the analysis bias other than the initial one, the process of Step 209 is executed. The contents of this process are similar to those in the first embodiment.

Next, a case with a plurality of biases to change in analysis will be considered. As an example, in the steady analysis involving an external circuit of the CMOS inverter in FIG. 7 used in the second embodiment, in case of biases of the voltage source VDD being 3.3 [V] and 5.0 [V], consecutive execution of analysis to change the biases of the voltage source VIN from 0[V] to 3.3[V] and from 0[V] to 5.0[V] respectively is considered. That is, at first, with the voltage source VDD being fixed at 3.3[V], the bias of the voltage source VIN is changed from 0[V] to 3.3[V], and subsequently, with the voltage source VDD being fixed at 5.0[V], the bias of the voltage source VIN is changed from 0[V] to 5.0[V].

At this time, under circumstances that the initial analysis bias when the voltage source VDD has become 5.0 [V] from 3.3[V], that is, analysis of VVDD=3.3[V], VVIN=3.3[V] is over and analysis of VVDD=5.0[V], VVIN=0[V] is about to start, since the state is largely different from the state of the previous analysis, direct usage of the previously analyzed results as the initial values will make convergence difficult.

However, since a user to proceed with analysis knows that the input is Low and the output is High under this situation, it is possible to presume the potentials on the device electrodes. That is, a user designates a presumed value of the potentials of the device electrodes toward this analysis bias in advance and Step 202 judges whether or not it is the designated analysis bias and in the case it is the designated analysis bias, as in case of the initial analysis bias, the initial values setting processes of Step 203 to 206 can be executed.

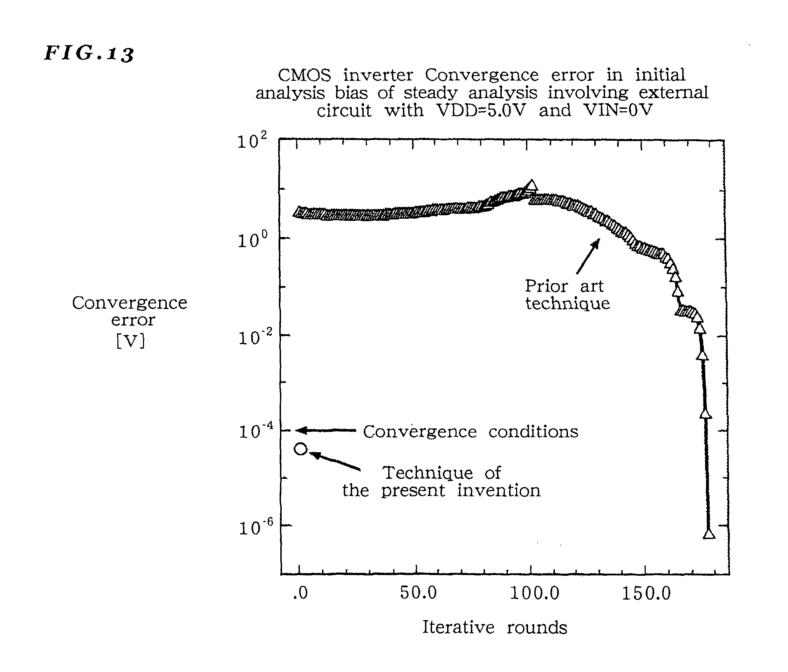

For the technique of the present invention and the prior art technique to set the result of a previous analysis as the initial value, a graph on convergence errors and iterative rounds of the analysis biases of 5.0[V] being the voltage source VDD and of 0[V] being the voltage source VIN is shown in FIG. 13. In this example, the convergence condition for convergence error of coulomb potential is set at $10^{-4}$[V]. In the prior art technique, 177 repetitions are required, but in the technique of the present invention, convergence takes place at one time.

In addition, in the prior art technique, the calculation time inclusive of the initial value setting process to obtain the solution of the initial analysis biases was 58.1 times longer than that in the technique of the present invention. Thus, also in this example, the initial value setting according to the technique of the present invention is largely effective for shortening calculation time.

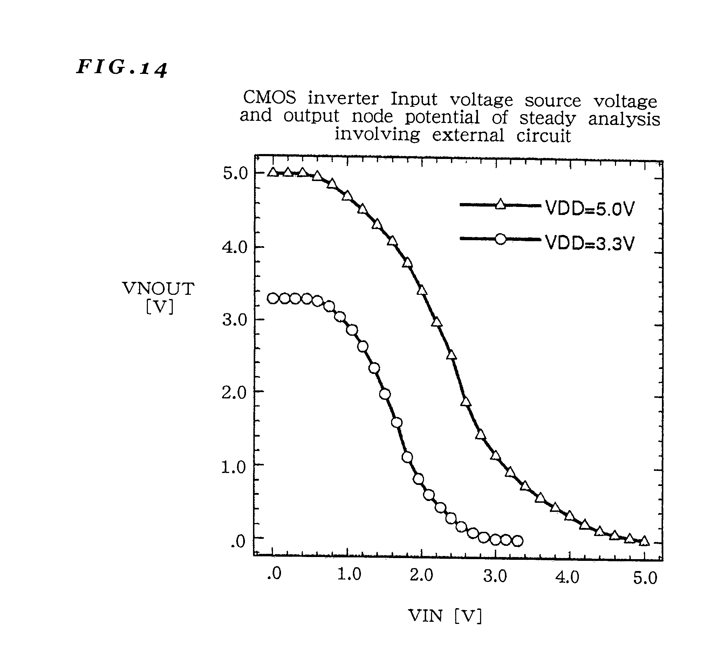

Incidentally, for a reference, a graph on the relationship between the voltage of the voltage source VIN and the potential of the node NOUT being the analysis results of this example is shown in FIG. 14.

As described so far, in the present invention, in device simulation involving an external circuit, with device electrode node potential presumed by the user, initial values of physical quantity on the device internal node as well as external circuit node potential are given, and these are used as initial values for analysis so as to give appropriate initial values easily, and thus to be capable of shortening calculation time.

The invention may be embodied in other specific forms without departing from the scope or essential characteristic thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

**Claims**

1. A semiconductor device simulation apparatus executing transient analysis of a semiconductor device involving an external circuit, comprising:

   presumed potential designation means for a user to designate a presumed potential in a first analysis bias of said semiconductor device electrode nodes;
   physical quantity initial value setting means for acquiring a physical quantity by analyzing said presumed potential as boundary conditions on said semiconductor device, from which said external circuit is removed, and setting said physical quantity as the initial value of the physical quantity at the internal nodes in said semiconductor device;
   potential initial value setting means for setting an initial value of potential at nodes of said external circuit based on already known potential and said presumed potential; and
   semiconductor device analysis means for analyzing a semiconductor device involving said external circuit with said respective initial values set by this potential initial value setting means and said physical quantity initial value setting means.

2. A semiconductor device simulation apparatus executing steady analysis of a device involving an external circuit, comprising:

   presumed potential designation means for a user to designate a presumed potential in one or more analysis bias(es) of said semiconductor device electrode nodes;
   physical quantity initial value setting means for acquiring a physical quantity by analyzing said presumed potential as boundary conditions on said semiconductor device, from which said external circuit is removed, and setting said physical quantity as the initial value of the physical quantity at the internal nodes in said semiconductor device;
   potential initial value setting means for setting an initial value of potential at nodes of said external circuit based on already known potential and said presumed potential; and
   semiconductor device analysis means for analyzing a semiconductor device involving said external circuit with said respective initial values set by this potential initial value setting means and said physical quantity initial value setting means.

3. The semiconductor device simulation apparatus according to Claim 1 or 2, wherein said presumed potential is a voltage of an upper level or a lower level of digital signals

4. The semiconductor device simulation apparatus according to Claim 1 or 2, wherein said physical quantity is coulomb potential, the density of electron, the hole density, electron temperature and hole temperature.

5. The semiconductor device simulation apparatus according to Claim 1 or 2, wherein said physical quantity initial value setting means use a coupled method or a Gammel method for analysis

6. The semiconductor device simulation apparatus according to Claim 1 or 2, wherein said known potential is voltage source potential or ground potential.

7. The semiconductor device simulation apparatus according to Claim 1 or 2, wherein potential initial value setting means use circuit equations based on the Kirchhoff's law to set said initial values.

8. A semiconductor device simulation method executing transient analysis on a semiconductor device involving an external circuit, comprising:

   procedure for a user to designate a presumed potential in a first analysis bias of electrode nodes of said semiconductor device;

   acquiring a physical quantity by analyzing said presumed potential as boundary conditions on said semiconductor device, from which said external circuit has been removed, and setting said physical quantity as an initial value of the physical quantity at internal nodes in said semiconductor device;
   setting an initial value of potential at nodes of said external circuit based on already known potential and said presumed potential; and
   analyzing a semiconductor device involving said external circuit with said set respective initial values.

9. A semiconductor device simulation method executing steady analysis on a semiconductor device involving an external circuit, comprising:

   procedure for a user to designate a presumed potential in one or more analysis bias(es) of electrode nodes of said semiconductor device;

   acquiring a physical quantity by analyzing said presumed potential as boundary conditions on said semiconductor device, from which said external circuit has been removed, and setting said physical quantity as an initial value of the physical quantity at internal nodes in said semiconductor device;
   setting an initial value of potential at nodes of said external circuit based on already known potential and said presumed potential; and
   analyzing a semiconductor device involving said external circuit with said set respective initial values.

10. A storage medium that can be read out by a computer and in which a semiconductor device simulation program executing transient analysis of a semiconductor device involving an external circuit is stored to function the computer comprising:

   presumed potential designation means for a user to designate a presumed potential in a first analysis bias of said semiconductor device electrode nodes;
   physical quantity initial value setting means for acquiring a physical quantity by analyzing said presumed potential as boundary conditions on said semiconductor device, from which said external circuit is removed, for setting said physical quantity as the initial value of the physical quantity at the internal nodes in said semiconductor device;
   potential initial value setting means for setting an initial value of potential at nodes of said external circuit based on already known potential and said presumed potential; and,
   semiconductor device analysis means for analyzing a semiconductor device involving said external circuit with said respective initial values set by this potential initial value setting means and said physical quantity initial value setting means.

11. A storage medium that can be read out by a computer and in which a semiconductor device simulation program executing steady analysis of a semiconductor device involving an external circuit is stored to function the computer comprising:

   presumed potential designation means for a user to designate a presumed potential in one or more analysis bias(es) of said semiconductor device electrode nodes;
   physical quantity initial value setting means for acquiring a physical quantity by analyzing said presumed potential as boundary conditions on said semiconductor device, from which said external circuit is removed, for setting said physical quantity as the initial value of the physical quantity at the internal nodes in said semiconductor device;

potential initial value setting means for setting an initial value of potential at nodes of said external circuit based on already known potential and said presumed potential; and

semiconductor device analysis means for analyzing a semiconductor device involving said external circuit with said respective initial values set by this potential initial value setting means and said physical quantity initial value setting means.

**FIG.1**

(Device simulation apparatus)
<u>10</u>

Presumed potential

↓

| Presumed potential designating means | ~12 |

●

| Physical quantity initial value setting means | ~14 |     | Potential initial value setting means | ~16 |

| Device analyzing means | ~18 |

↓

Simulation result

**FIG.2**

```
                    ┌─────────┐
                    │  Start  │
                    └─────────┘
                         │
                         ▼
        ┌──────────────────────────────┐
        │     To set analysis bias     │──── 101
        └──────────────────────────────┘
                         │
                         ▼
                      ╱ 102 ╲
                    ╱ Initial ╲        NO
                  ╱  analysis  ╲──────────────┐
                    ╲  bias  ╱                │
                      ╲  ?  ╱                 │
                       ╲ ╱                    │
                        │ YES                 │
                        ▼                     │
        ┌──────────────────────────────┐      │
        │  To set presumed potentials  │      │
        │  of nodes on device          │──── 103
        │  electrodes designated by    │      │
        │  a user                      │      │
        └──────────────────────────────┘      │
                        │                     │
                        ▼                     │
        ┌──────────────────────────────┐      │
        │  To analyze a device portion │      │
        │  with presumed potentials as │──── 104
        │  boundary conditions         │      │
        └──────────────────────────────┘      │
                        │                     │
                        ▼                     │
        ┌──────────────────────────────┐      │
        │  To set the obtained physical│      │
        │  quantity as initial values  │      │
        │  of physical quantity on     │──── 105
        │  device internal nodes       │      │
        └──────────────────────────────┘      │
                        │                     ▼
                        │     ┌──────────────────────────┐─── 109
                        │     │ To set previous analysis │
                        │     │ results as initial values│
                        │     └──────────────────────────┘
                        ▼                     │
        ┌──────────────────────────────┐      │
        │  To trace an external circuit│      │
        │  from nodes on device        │      │
        │  electrodes to nodes of the  │      │
        │  ground and set potential    │──── 106
        │  initial values on the       │      │
        │  external circuit nodes from │      │
        │  the presumed potential and  │      │
        │  the voltage source potential│      │
        └──────────────────────────────┘      │
                        │◄────────────────────┘
                        ▼
        ┌──────────────────────────────┐
        │  To execute analysis         │──── 107
        │  involving the external      │
        │  circuit                     │
        └──────────────────────────────┘
                        │
                        ▼
                      ╱ 108 ╲
          NO        ╱   Is    ╲
      ┌───────────╱  analysis  ╲
      │            ╲ on all     ╱
      │              ╲ biases  ╱
      │                ╲ over ╱
      │                  ╲ ? ╱
      │                   │ YES
      │                   ▼
      │               ┌─────────┐
      │               │   End   │
      │               └─────────┘
```

19

FIG.3

EP 1 150 221 A2

*FIG.4*

**FIG.5**

nMOS inverter Convergence error in initial analysis bias
of transient analysis involving external circuit

Convergence
error
[V]

Prior art technique

Convergence conditions

Technique of the
present invention

Iterative rounds

EP 1 150 221 A2

**FIG.6**

nMOS inverter Input waveform and output waveform
of transient analysis involving external circuit

EP 1 150 221 A2

FIG.7

VDD
VIN
GND
GND
GND
NIN
GN
SN
nMOS transistor
DN
NOUT
GP
DP
pMOS transistor
N well
P-type substrate
BN
GND
SP
BP
NDD
CL
GND
GND

FIG.8

Power supply
## VDD

pMOS
transistor
(GP)    (DP)
        (BP)
        (SP)

Input terminal
## VIN                 (NOUT)    Output terminal
                                 VOUT

        (DN)
        (BN)                     Load
        (SN)                     capacitance
(GN)                             CL
nMOS
transistor

GND              GND

EP 1 150 221 A2

EP 1 150 221 A2

*FIG.9*

CMOS inverter Convergence error in initial
analysis bias of transient analysis
involving external circuit

Convergence
error
[V]

FIG.10

CMOS inverter Input waveform and output
waveform of transient analysis involving
external circuit

EP 1 150 221 A2

*FIG.11*

(Device simulation apparatus)
<u>20</u>

Presumed potential

↓

| Presumed potential designating means | ~22 |

●

| Physical quantity initial value setting means | ~24 |

| Potential initial value setting means | ~26 |

| Device analyzing means | ~28 |

↓

Simulation result

*FIG.12*

Start

To set analysis bias — 201

Designated analysis bias ? — 202

NO

YES

To set presumed potentials of nodes on device electrodes designated by a user — 203

To analyze a device portion with presumed potentials as boundary conditions — 204

To set the obtained physical quantity as initial values of physical quantity on device internal nodes — 205

To set previous analysis results as initial values — 209

To trace an external circuit from nodes on device electrodes to nodes of the ground and set potential initial values on the external circuit nodes from the presumed potential and the voltage source potential — 206

To execute analysis involving the external circuit — 207

Is analysis on all biases over ? — 208

NO

YES

End

## *FIG.13*

CMOS inverter Convergence error in initial
analysis bias of steady analysis involving external
circuit with VDD=5.0V and VIN=0V

Convergence
error
[V]

Prior art
technique

Convergence conditions

Technique of
the present invention

Iterative rounds

EP 1 150 221 A2

FIG.14

CMOS inverter Input voltage source voltage and output node potential of steady analysis involving external circuit

*FIG.15*

Start

To set initial value $x_0$ — 1301

$i = 0$ — 1302

$$\delta x_i = - \frac{F(x_i)}{F'(x_i)}$$ — 1303

1304

$\delta x_i < \varepsilon$ ? → YES

NO

$x_{i+1} = x_i + \delta x_i$
$i = i+1$ — 1305

End

EP 1 150 221 A2

*FIG.16*

y

$y = F(x)$

$F(x_0)$

$F(x_1)$

0   $x_0$   $x_1$   $x_2$   $x_i$   x

1401
Initial value

1402
Solution

*FIG.17*

Start

To set i=0 for initial values $\Psi_0$, $n_0$, $p_0$, $T_n0$ and $T_p0$ — 1501

1502

$$
\begin{pmatrix}
F'_{\psi\psi\,i} & F'_{\psi n\,i} & F'_{\psi p\,i} & F'_{\psi T_n\,i} & F'_{\psi T_p\,i} \\
F'_{n\,\psi\,i} & F'_{n\,n\,i} & F'_{n\,p\,i} & F'_{n T_n\,i} & F'_{n T_p\,i} \\
F'_{p\,\psi\,i} & F'_{p\,n\,i} & F'_{p\,p\,i} & F'_{p T_n\,i} & F'_{p T_p\,i} \\
F'_{T_n\psi\,i} & F'_{T_n\,n\,i} & F'_{T_n p\,i} & F'_{T_n T_n\,i} & F'_{T_n T_p\,i} \\
F'_{T_p\psi\,i} & F'_{T_p\,n\,i} & F'_{T_p p\,i} & F'_{T_p T_n\,i} & F'_{T_p T_p\,i}
\end{pmatrix}
\begin{pmatrix}
\delta\psi_i \\
\delta n_i \\
\delta p_i \\
\delta T_{n i} \\
\delta T_{p i}
\end{pmatrix}
=
\begin{pmatrix}
- F_{\psi i} \\
- F_{n i} \\
- F_{p i} \\
- F_{T_n i} \\
- F_{T_p i}
\end{pmatrix}
$$

To solve

Convergence judgment — 1503

$\delta\psi_i < \varepsilon_\psi$ ?

$\delta n_i < \varepsilon_n$ ?

$\delta p_i < \varepsilon_p$ ?

$\delta T_{n i} < \varepsilon_{Tn}$ ?

$\delta T_{p i} < \varepsilon_{Tp}$ ?

YES

NO

1504 —

$\psi_{i+1} = \psi_i + \delta\psi_i$

$n_{i+1} = n_i + \delta n_i$

$p_{i+1} = p_i + \delta p_i$

$T_{n i+1} = T_{n i} + \delta T_{n i}$

$T_{p i+1} = T_{p i} + \delta T_{p i}$

$i = i + 1$

End

*FIG.18*

$$\text{Start}$$

To set $i = 0$ for initial values $\Psi_0$, $n_0$, $p_0$, $T_{n0}$ and $T_{p0}$ —1601

To solve
$F'_{\Psi i}\,\delta\,\Psi_i = -F_{\Psi i}$ —1602

To solve
$F'_{ni}\,\delta\,n_i = -F_{ni}$ —1603

To solve
$F'_{pi}\,\delta\,p_i = -F_{pi}$ —1604

To solve
$F'_{Tni}\,\delta\,T_{ni} = -F_{Tni}$ —1605

To solve
$F'_{Tpi}\,\delta\,T_{pi} = -F_{Tpi}$ —1606

Convergence iudgment
$\delta\,\Psi_i < \varepsilon\,\Psi$ ?
$\delta\,n_i < \varepsilon\,n$ ?
$\delta\,p_i < \varepsilon\,p$ ?
$\delta\,T_{ni} < \varepsilon\,T_n$ ?
$\delta\,T_{pi} < \varepsilon\,T_p$ ? —1607

YES

NO

$\Psi_{i+1} = \Psi_i + \delta\,\Psi_i$
$n_{i+1} = n_i + \delta\,n_i$
$p_{i+1} = p_i + \delta\,p_i$
$T_{ni+1} = T_{ni} + \delta\,T_{ni}$
$T_{pi+1} = T_{pi} + \delta\,T_{pi}$
$i = i + 1$ —1608

$$\text{End}$$

FIG.19

## FIG.20

MESH.

EP 1 150 221 A2

*FIG.21(1)*

$$R_1 \qquad\qquad R_2$$

$$i_1 \qquad\qquad i_0 \qquad\qquad i_2$$

*FIG.21(2)*

$$R_1 \qquad\qquad V_2$$

$$i_1 \qquad\qquad i_0 \qquad\qquad i_2$$